# EUROPÄISCHE PATENTSCHRIFT

(11) **EP 2 810 801 B1**
(45) Veröffentlichungstag und Bekanntmachung des Hinweises auf die Patenterteilung: **27.09.2017**
(21) Anmeldenummer: 14169657.5
(22) Anmeldetag: 23.05.2014
(51) Int. Cl.: B60H 1/34

(54) **Bedieneinrichtung für einen Luftausströmer und Luftausströmer**
Operating device for an air vent and air vent
Dispositif de commande pour un dispositif d'écoulement d'air et dispositif d'écoulement d'air

(30) Priorität: 07.06.2013 DE 102013105927
(43) Veröffentlichungstag der Anmeldung: 10.12.2014
(73) Patentinhaber: Illinois Tool Works Inc., Glenview, IL 60025 (US)
(72) Erfinder: Noichl, Harald, 67677 Enkenbach - Alsenborn (DE); Mootz, Frank, 67716 Heltersberg (DE)
(74) Vertreter: Hauck Patentanwaltspartnerschaft mbB

(56) Entgegenhaltungen:
- DE-A1-102007 036 532
- DE-A1-102011 050 435
- DE-C1- 4 327 266
- FR-A1- 2 844 484

## Beschreibung

Die Erfindung betrifft eine Bedieneinrichtung für einen Luftausströmer, der zumindest eine verschwenkbare Lamelle aufweist. Des Weiteren betrifft die Erfindung einen Luftausströmer.

Luftausströmer mit Lamellen zur Ablenkung des Luftstroms weisen beispielsweise ein zentrales Bedienelement auf, mit welchem die Lamellen verschwenkt werden können. Ist nur eine Lamellengruppe mit parallelen, miteinander gekoppelten Lamellen vorgesehen, wird das Bedienelement direkt an einer der Lamellen befestigt, sodass durch Bewegen des Bedienelements die Lamellen direkt in die Richtung verschwenkt werden können, in die das Bedienelement verschwenkt wird.

Sind zwei hintereinander angeordnete, beispielsweise senkrecht zueinander angeordnete Lamellengruppen vorgesehen, ist eine direkte Bedienung der vom Fahrzeuginnenraum betrachtet hinteren Lamellen nicht möglich, da diese von den vorderen Lamellen verdeckt werden. Aus Komfortgründen ist es aber erwünscht, beide Lamellengruppen mit einem Bedienelement zu verschwenken.

Um die hinteren Lamellen zu bedienen, ist im Stand der Technik am Bedienelement ein rückseitig abstehender Hebel vorgesehen, der gelenkig mit einer Lamelle der hinteren Lamellengruppe gekoppelt ist. Der Hebel ist mit dem Bedienelement verbunden oder Teil des Bedienelements und gemeinsam mit diesem an einer vorderen Lamelle oder im Luftausströmer gelenkig gelagert. Wird das Bedienelement verschwenkt, werden die hinteren Lamellen durch den Hebel in die entgegengesetzte Richtung verschwenkt.

Nachteilig an diesen Bedieneinrichtungen ist, dass die hinteren Lamellen entgegengesetzt zur Schwenkrichtung des Bedienelements verschwenkt werden, während bei den vorderen Lamellen die Schwenkrichtung der Lamellen mit der Schwenkrichtung des Bedienelements übereinstimmt. Dies erfordert vom Fahrzeuginsassen ein häufiges Umdenken, wodurch der Fahrer des Fahrzeugs abgelenkt werden kann.

Aus der DE 10 2011 050 435 A1 ist ein Luftausströmer bekannt, der zwei miteinander gekoppelte Hebel aufweist. Durch die Verwendung von zwei Hebel wird die hintere Lamelle, die mit dem hinteren Hebel gekoppelt ist, in die gleiche Richtung verschwenkt wie das Bedienelement.

Aufgabe der Erfindung ist es, eine Bedieneinrichtung für einen Luftausströmer zu schaffen, die eine einfache und intuitive Bedienung eines Luftausströmers ermöglicht. Aufgabe der Erfindung ist es ferner, einen Luftausströmer mit einer solchen Bedieneinrichtung bereitzustellen.

Zur Lösung der Aufgabe ist eine Bedieneinrichtung für einen Luftausströmer vorgesehen, der zumindest eine verschwenkbare Lamelle aufweist, mit einem ersten Bedienhebel, der einen ersten Hebelarm, einen zweiten Hebelarm sowie ein zwischen diesen angeordnetes Lagerelement aufweist, um das der erste Bedienhebel um eine Schwenkachse schwenkbar gelagert ist, und mit einem zweiten Bedienhebel, der einen ersten Hebelarm, einen zweiten Hebelarm sowie ein zwischen diesen angeordnetes Lagerelement aufweist, um das der zweite Bedienhebel um eine Schwenkachse schwenkbar gelagert ist. Der erste Hebelarm des zweiten Bedienhebels ist mit dem zweiten Hebelarm des ersten Bedienhebels gekoppelt, und der zweite Hebelarm des zweiten Bedienhebels kann schwenkbar mit der Lamelle gekoppelt werden. Erfindungsgemäß ist ein separates Gehäuseteil vorgesehen, das eine Lageraufnahme für die Lagerelemente des ersten und des zweiten Bedienhebels aufweist. Beide Bedienhebel können mit den Lagerelementen im Luftausströmer, beispielsweise an einer vom Fahrzeuginnenraum aus betrachteten vorderen Lamelle, gelagert werden. Der erste Bedienhebel entspricht von der Funktionsweise einem Hebel, wie er aus einem Luftausströmer aus dem Stand der Technik bekannt ist, der fest mit einem Bedienelement verbunden ist und mit diesem gemeinsam verschwenkt werden kann. Erfindungsgemäß ist zwischen diesem ersten Bedienhebel und der Lamelle ein zweiter Bedienhebel angeordnet, der ebenfalls schwenkbar im Luftausströmer gelagert werden kann und sowohl mit dem ersten Bedienhebel wie auch der Lamelle schwenkbar verbunden ist. Dieser zweite Bedienhebel kann um das Lagerelement verschwenkt werden. Da der zweite Bedienhebel mit dem ersten Bedienhebel gekoppelt ist, wird dieser, analog zur Lamelle eines aus dem Stand der Technik bekannten Luftausströmers, entgegengesetzt zum ersten Bedienhebel verschwenkt. Die mit dem zweiten Bedienhebel gekoppelte Lamelle wird wiederum entgegengesetzt zum zweiten Bedienhebel verschwenkt, also in dieselbe Richtung wie der erste Bedienhebel. Dadurch wird die Lamelle jeweils in die Schwenkrichtung des ersten Bedienhebels oder eines am ersten Bedienhebel vorgesehenen Bedienelements verschwenkt. Somit ist eine intuitivere Bedienung eines Luftausströmers mit einer solchen Bedieneinrichtung möglich, da die Verschwenkung der Lamellen und somit die Ablenkung der Luft stets in die Richtung erfolgt, in die ein Bedienelement verschwenkt wird. Die Anordnung des zusätzliches Gehäuseteils ermöglicht, die Bedieneinrichtung als Baugruppe, bestehend aus erstem und zweitem Bedienhebel sowie dem Gehäuseteil, vorzumontieren. Diese Baugruppe kann anschließend im Luftausströmer, beispielsweise an eine Lamelle, montiert werden. Dadurch ist eine wesentlich einfachere und schnellere Montage eines Luftausströmers mit einer solchen Bedieneinrichtung möglich. Zudem sind am Luftausströmer keine zusätzlichen Lageraufnahmen für die Bedienhebel erforderlich.

Insbesondere bei einem Luftausströmer mit zwei senkrecht zueinander stehenden Lamellenpaaren ist eine wesentlich einfachere Bedienung möglich. Die Bedieneinrichtung ist beispielsweise auf einer vom Fahrzeuginnenraum aus betrachteten vorderen Lamelle gelagert, wobei der erste Bedienhebel vom Fahrzeuginnenraum aus bedienbar ist. Durch Verschwenken des ersten Bedienhebels und somit der gesamten Bedieneinrichtung kann die vordere Lamelle bedient werden. Durch Verschwenken des ersten Bedienhebels in der Ebene der vorderen Lamellen wird die hintere Lamelle über die erfindungsgemäße Bedieneinrichtung verstellt, wobei die hintere Lamelle ebenfalls jeweils in Schwenkrichtung des ersten Bedienhebels verstellt wird. Beide Lamellenpaare werden somit jeweils in Betätigungsrichtung der Bedieneinrichtung verschwenkt, so dass eine intuitive Bedienung möglich ist.

Um sicherzustellen, dass die Lamelle exakt entgegengesetzt zum ersten Bedienhebel verschwenkt wird, sind die Schwenkachsen des ersten und des zweiten Bedienhebels vorzugsweise parallel zueinander angeordnet. Insbesondere kann die Schwenkachse der Lamelle, die mit dem zweiten Hebelarm des zweiten Bedienhebels gekoppelt ist, ebenfalls parallel zu diesen Schwenkachsen angeordnet sein.

Die Lageraufnahmen weisen beispielsweise jeweils einen Einführabschnitt sowie eine Verrastung für die Lagerelemente auf. Die Bedienhebel können einfach in die Einführabschnitte eingeschoben werden, bis diese in den Lageraufnahmen verrasten, sodass eine einfache und werkzeuglose Montage der Lagerelemente möglich ist.

Um das Gehäuseteil im Luftausströmer, beispielsweise an einer Lamelle, zu fixieren, weist das Gehäuseteil, insbesondere am Außenumfang, Halteelemente auf, die zur luftausströmerseitigen Montage des Gehäuseteils vorgesehen sind. Diese Halteelemente können insbesondere Rastelemente sein, sodass das Gehäuseteil einfach in den Luftausströmer eingeschoben und in diesem verrastet werden kann.

Die Koppelung des ersten und des zweiten Bedienhebels bzw. des zweiten Bedienhebels und der Lamelle kann auf beliebige Weise erfolgen. Aufgrund der Winkeländerungen zwischen den Bedienhebels bzw. zwischen beiden Bedienhebeln und der Lamelle kommt es allerdings zu Längenänderungen, sodass eine Koppelung vorteilhaft ist, die einen Längenausgleich in Längsrichtung der Bedienhebel aufweist. Dazu ist vorzugsweise am ersten Hebelarm des zweiten, Bedienhebels oder am zweiten Hebelarm des ersten Bedienhebels eine gabelförmige Aufnahme vorgesehen, und am zweiten Hebelarm des ersten Bedienhebels oder am ersten Hebelarm des zweiten Bedienhebels ist ein Zapfen vorgesehen, der in die gabelförmige Aufnahme ragt und in dieser drehbar und in Längsrichtung der Aufnahme verschiebbar gelagert ist. Dadurch sind die Bedienhebel schwenkbar miteinander gekoppelt. Es ist aber dennoch ein Längenausgleich möglich, indem der Zapfen in Längsrichtung in der gabelförmigen Aufnahme verschoben wird. Diese Art der Koppelung hat zudem den Vorteil, dass eine einfache Montage der Bedienhebel aneinander möglich ist, indem diese von entgegengesetzten Richtungen, beispielsweise von entgegengesetzten Seiten eines Gehäuseteils, ineinander geschoben werden.

Die Koppelung des zweiten Bedienhebels mit der Lamelle erfolgt beispielsweise ebenfalls über eine gabelförmige Aufnahme sowie einen Zapfen, der in die gabelförmige Aufnahme ragt. Vorzugsweise ist die gabelförmige Aufnahme am zweiten Bedienhebel vorgesehen. Am zweiten Hebelarm des zweiten Bedienhebels kann also ebenfalls eine gabelförmige Aufnahme vorgesehen sein, die einen lamellenseitigen Zapfen aufnimmt, oder ein Zapfen, der in eine lamellenseitige gabelförmige Aufnahme eingreift.

Die Lagerelemente können beispielsweise Lagerzapfen sein, die sich in Längsrichtung der Schwenkachsen erstrecken.

Die Schwenkachsen des ersten und des zweiten Bedienhebels sowie der Lamelle sind vorzugsweise parallel zueinander angeordnet und liegen insbesondere in einer Ebene. In Strömungsrichtung des Luftausströmers in Richtung zum Fahrzeuginnenraum liegen die Schwenkachsen der Bedienhebel vorzugsweise vor der Lamelle, wobei die Schwenkachse des ersten Bedienhebels dem Fahrzeuginnenraum am nächsten liegt, so dass der erste Bedienhebel vom Fahrzeuginnenraum aus verstellt werden kann.

An einem solchen Luftausströmer kann auch zumindest eine zweite verschwenkbare Lamelle vorgesehen sein, wobei die Schwenkachse der zweiten Lamelle insbesondere quer zur Schwenkachse der ersten Lamelle angeordnet ist und die zweite Lamelle in Strömungsrichtung des Luftausströmers hinter der ersten Lamelle angeordnet ist.

In einer solchen Ausführungsform sind die Lageraufnahmen für die Lagerelemente beispielsweise an der zweiten Lamelle vorgesehen. Die Bedienhebel sind also an der zweiten Lamelle schwenkbar gelagert. Somit ist durch Verschwenken des ersten Bedienhebels in einer ersten Betätigungsrichtung, senkrecht zur Ebene der zweiten Lamelle bzw. der Schwenkachse der zweiten Lamelle ein unmittelbares Verschwenken der zweiten Lamelle möglich. Durch Verschwenken in einer zweiten Betätigungsrichtung, senkrecht zur ersten Betätigungsrichtung also in der Ebene der zweiten Lamelle, wird die erste Lamelle verschwenkt. Beide Lamellen können durch diese Bedieneinrichtung somit separat voneinander verschwenkt werden, wobei die Schwenkrichtung der Lamellen jeweils der Schwenkrichtung des ersten Bedienhebels entspricht.

Die Lageraufnahmen können unmittelbar an der zweiten Lamelle vorgesehen sein. Es ist aber auch möglich, dass an der zweiten Lamelle ein Gehäuseteil vorgesehen ist, das die Lageraufnahmen für die Lagerelemente des ersten und des zweiten Bedienhebels aufweist. Somit kann die Bedieneinrichtung vormontiert werden und anschließend an die zweite Lamelle angesetzt werden.

Weitere Vorteile und Merkmale ergeben sich aus der nachfolgenden Beschreibung in Verbindung mit den beigefügten Zeichnungen. In diesen zeigen:
- Figur 1 eine Frontansicht auf eine Bedieneinrichtung aus dem Stand der Technik,
- Figur 2 eine Draufsicht auf das Bedienelement aus Figur 1,
- Figur 3 eine Draufsicht auf einen erfindungsgemäßen Luftausströmer mit einem erfindungsgemäßen Bedienelement,
- Figur 4 den Luftausströmer aus Figur 3 mit der Bedieneinrichtung in einem verschwenktem Zustand,
- Figur 5 eine Explosionsansicht des Bedienelements des Luftausströmers aus Figur 3, und
- Figur 6 das Bedienelement aus Figur 5 in zusammengesetztem Zustand.

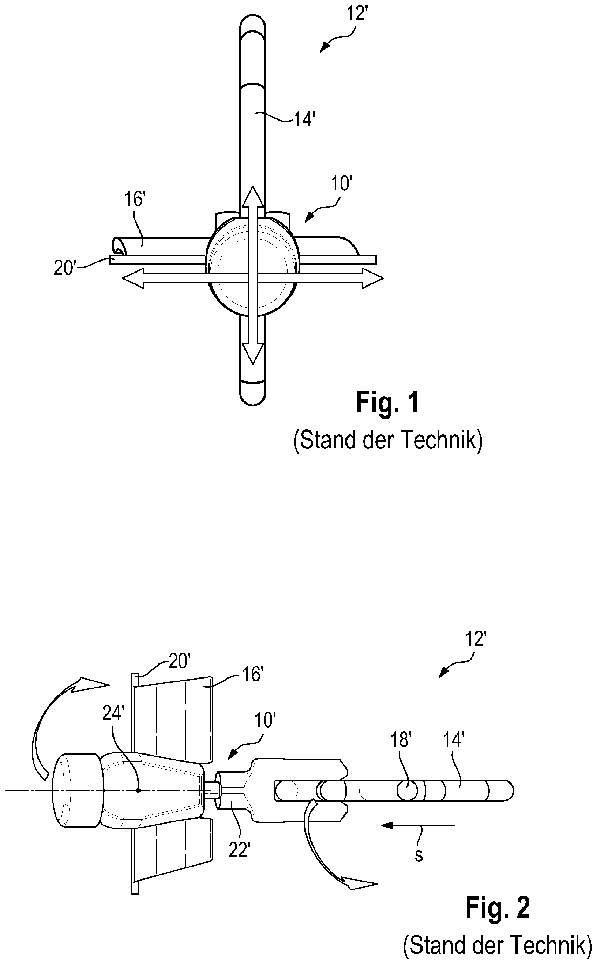

In den Figuren 1 und 2 ist eine Bedieneinrichtung 10' aus dem Stand der Technik in einem hier nur ausschnittsweise dargestellten Luftausströmer 12' gezeigt. Der Luftausströmer 12' hat eine vom Fahrzeuginnenraum aus betrachtet erste, hintere Lamelle 14' sowie eine vom Fahrzeuginnenraum aus betrachtet zweite, vordere Lamelle 16'. Beide Lamellen sind jeweils um eine Schwenkachse 18', 20' verschwenkbar.

Der Luftausströmer 12' weist weitere, hier nicht dargestellte Lamellen auf, die jeweils parallel zur ersten und zur zweiten Lamelle 14', 16' angeordnet sind. Die parallelen Lamellen sind jeweils mit der ersten oder der zweiten Lamelle 14', 16' gekoppelt, so das diese gemeinsam mit der ersten oder der zweiten Lamelle 14', 16' verschwenkt werden können.

Die Bedieneinrichtung 10' weist einen Bedienhebel 22' auf, der um eine Schwenkachse 24' schwenkbar an der zweiten Lamelle 16' gelagert ist. Wie in Figur 2 zu sehen ist, ist der Bedienhebel 22' schwenkbar mit der ersten Lamelle 14' gekoppelt.

Wird der Bedienhebel 22' bezüglich Figur 1 nach oben oder nach unten verschwenkt, wird die mit dem Bedienhebel 22' gekoppelte zweite Lamelle 16' zusammen mit dem Bedienhebel 22' um die Schwenkachse 20' nach oben oder nach unten bewegt. Die Schwenkrichtung der Lamelle 16' entspricht also der Schwenkrichtung des Bedienhebels 22'.

Um die hinter der zweiten Lamelle 16' liegende erste Lamelle 14' zu bedienen, wird der Bedienhebel 22' um seine Schwenkachse 24' auf der zweiten Lamelle 16', also in der Ebene der zweiten Lamelle 16', verschwenkt. Wie in Figur 2 zu sehen ist, wird bei einem Verschwenken des Bedienhebels 22' die erste Lamelle 14' aber entgegengesetzt zum Bedienhebel 22' um die Schwenkachse 18' verschwenkt.

Daher ist die Schwenkrichtung der ersten Lamelle 14' und somit die Ablenkrichtung für den Luftstrom jeweils entgegengesetzt zur Schwenkrichtung des Bedienhebels 22', während bei einer Bedienung der zweiten Lamelle 16' die Schwenkrichtung des Bedienhebels 22' der Schwenkrichtung der zweiten Lamelle 16' entspricht. Je nachdem, welche der Lamellen 14', 16' der Fahrzeuginsasse bedient, also die ersten Lamellen 14' oder die zweiten Lamellen 16', muss der Fahrzeuginsasse also umdenken, ob er den Bedienhebel in die gewünschte Luftstromrichtung oder entgegengesetzt zu dieser bewegen muss.

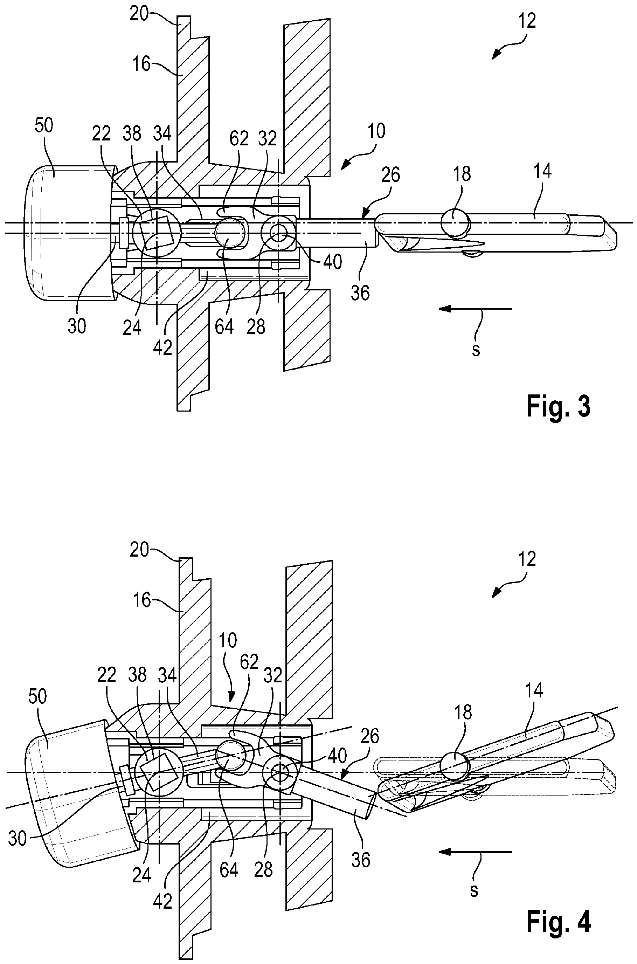

Die in den Figuren 3 bis 6 dargestellte Bedieneinrichtung für einen Luftausströmer behebt diesen Nachteil.

Auch der in den Figuren 3 und 4 ausschnittsweise gezeigte Luftausströmer 12 hat zwei Lamellengruppe, mit parallelen Lamellen, die miteinander gekoppelt sind, also gemeinsam verschwenkt werden können. Aus Gründen der Übersichtlichkeit sind jeweils nur die erste und die zweite Lamelle 14, 16 gezeigt, die mit der Bedieneinrichtung 10 gekoppelt sind.

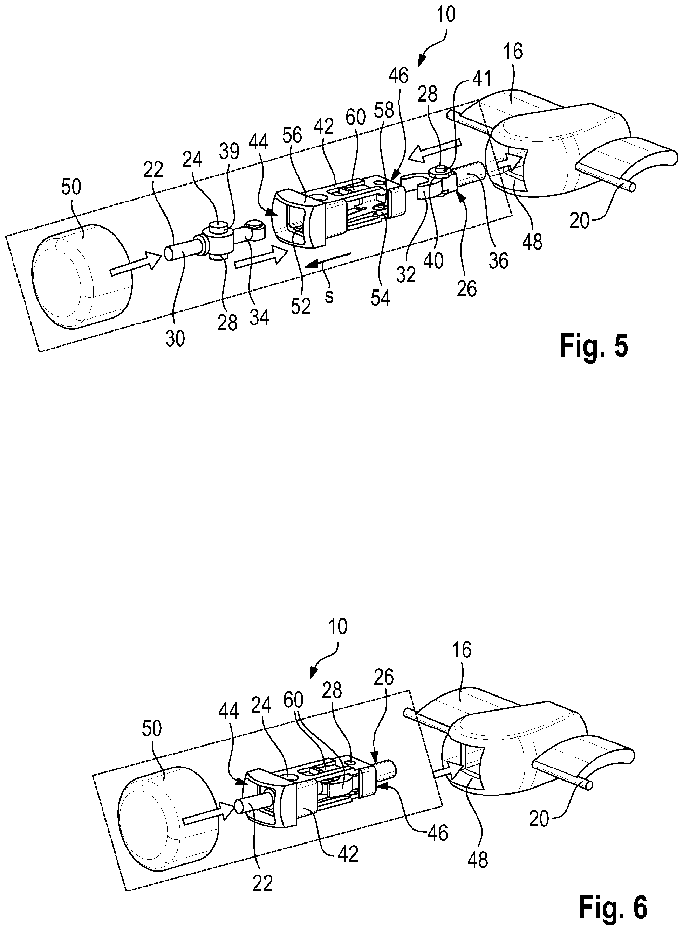

Die erfindungsgemäße Bedieneinrichtung 10 weist dazu einen ersten Bedienhebel 22 sowie einen zweiten Bedienhebel 26 auf. Jeder der Bedienhebel weist einen ersten Hebelarm 30, 32 sowie einen zweiten Hebelarm 34, 36 auf. Zwischen den ersten Hebelarmen 30, 32 und den zweiten Hebelarmen 34, 36 ist jeweils ein Lagerelement 38, 40 vorgesehen, das, wie insbesondere in Figur 5 zu sehen ist, einen Lagerzapfen 39, 41 aufweist. Mit diesen Lagerelementen 38, 40 sind der erste Bedienhebel 22 und der zweite Bedienhebel 26 jeweils um eine Schwenkachse 24, 28 verschwenkbar gelagert (Figuren 3 und 4).

Die Schwenkachsen 24, 28 sind in dieser Ausführungsform parallel zueinander sowie in einer Neutralstellung der zweiten Lamelle 16 parallel zur Schwenkachse 18 der ersten Lamelle 14 angeordnet. Wie insbesondere in Figur 3 zu sehen ist, sind alle drei Schwenkachsen 24, 28, 18 des Weiteren in einer Ebene angeordnet, wobei die Schwenkachse der ersten Lamelle in Strömungsrichtung S vorne und die Schwenkachse 24 des ersten Bedienhebels 22 in Strömungsrichtung S hinten angeordnet ist. Die Schwenkachse 28 des zweiten Bedienhebels 26 ist zwischen den Schwenkachsen 18, 24 angeordnet.

Die Bedieneinrichtung 10 weist des Weiteren ein Gehäuseteil 42 auf, in dem Lageraufnahmen 44, 46 für die Lagerelemente 38, 40 der Bedienhebel 22, 26 vorgesehen sind. Dieses Gehäuseteil 42 ist entgegen der Strömungsrichtung S, also vom Fahrzeuginnenraum aus betrachtet von vorne, in eine Aussparung 48 an der zweiten Lamelle 16 eingeschoben und in dieser fixiert.

Am ersten Hebelarm 30 des ersten Bedienhebels 22 ist des Weiteren ein Bedienknopf 50 vorgesehen.

Die Bedienung der zweite Lamelle 16, an der die Bedieneinrichtung 10 gehalten ist, erfolgt analog zur Bedienung des in den Figuren 1 und 2 gezeigten Luftausströmers 12' aus dem Stand der Technik.

Der erste Bedienhebel 22 bzw. der Bedienknopf 50 werden bezüglich der Figuren 5 und 6 nach oben oder nach unten verschwenkt, wodurch die zweite Lamelle 16 gemeinsam mit dem ersten Bedienhebel 22 um ihre Schwenkachse 20 verschwenkt wird.

Wird der Bedienknopf auf der zweiten Lamelle 16 in einer Schwenkrichtung in der Ebene der zweiten Lamelle 16 verschwenkt, um die erste Lamelle 14 zu verschwenken, wird der zweite Bedienhebel entgegengesetzt zur Schwenkrichtung S verschwenkt (Figur 4). Die Lamelle 14, die mit dem zweiten Bedienhebel 26 gekoppelt ist, wird entgegengesetzt zum zweiten Bedienhebel 26, also in dieselbe Schwenkrichtung wie der erste Bedienhebel 22, verschwenkt.

Durch den zweiten Bedienhebel 26, der gewissermaßen als Übertragungs- oder Umsetzhebel dient, wird also die Schwenkrichtung der Lamelle gegenüber dem Stand der Technik gemäß den Figuren 1 und 2 umgekehrt, sodass diese mit der Schwenkrichtung des ersten Bedienhebels 22 und des Bedienknopfes 50 übereinstimmt.

Dies ermöglicht eine wesentlich intuitivere und schnellere Bedienung eines Luftausströmers 12, da für beide Lamellen 14, 16 die Schwenkrichtung des ersten Bedienhebels 22 und des Bedienknopfes 50 der Schwenkrichtung der Lamellen 14, 16 entspricht.

Die Länge der Hebelarme 30, 32, 34, 36 bzw. die Lage der Lagerelement 38, 40 an den Bedienhebeln 22, 26 kann beliebig gewählt werden, um ein gewünschtes Übersetzungsverhältnis zwischen dem Verschwenken des Bedienknopfs 50 und dem Verschwenken der Lamelle 14 zu erzielen. Bei einem geeigneten Übersetzungsverhältnis kann beispielsweise das Verschwenken der Lamelle 14 mit demselben Schwenkwinkel wie der Bedienknopf 50 erfolgen. Es ist aber auch denkbar, dass bei kleinen Schwenkwinkel des Bedienknopfs 50 eine sehr große Verschwenkung der Lamelle 14 erzielt wird.

Wie in den Figuren 5 und 6 zu sehen ist, kann die Bedieneinrichtung 10, bestehend aus erstem Bedienhebel 22, zweitem Bedienhebel 26, Gehäuseteil 42 sowie Bedienknopf 50, vormontiert werden. Erst anschließend erfolgt die Montage an der zweiten Lamelle 16 und die Koppelung mit der Lamelle 14, indem die Bedieneinrichtung 10 entgegen der Strömungsrichtung S, also vom Fahrzeuginnenraum betrachtet von vorne, in die Aussparung 48 an der zweiten Lamelle 16 eingeschoben wird.

Um einen einfachen Zusammenbau der Bedieneinrichtung 10 zu ermöglichen, sind an den Lageraufnahmen 44, 46 jeweils Einführschrägen 52, 54 für die Bedienhebel 22, 26 bzw. die Lagerelemente 38, 40 der Bedienhebel 22, 26 vorgesehen. Die Fixierung der Lagerelemente 38, 40 im Gehäuseteil 42 erfolgt jeweils über eine durch Rastelemente gebildete Verrastung 56, 58, die eine werkzeug lose Montage der Bedienhebel 22, 26 im Gehäuseteil 42 ermöglichen.

Am Gehäuseteil 42 sind des Weiteren am Außenumfang Rastelemente 60 vorgesehen, um das Gehäuseteil 42 in der Aussparung 48 an der zweiten Lamelle 16 zu montieren.

Die Koppelung des ersten und des zweiten Bedienhebels erfolgt mittels einer gabelförmigen Aufnahme 62, die in der hier gezeigten Ausführungsform am ersten Hebelarm 32 des zweiten Bedienhebels 26 vorgesehen ist (Figuren 3 und 4). Am zweiten Hebelarm 34 des ersten Bedienhebels 22 ist ein Zapfen 64 vorgesehen, der in der gabelförmigen Aufnahme 62 verschwenkbar, in Längsrichtung der gabelförmigen Aufnahme 62 aber verschiebbar gelagert ist. Diese Lagerung ermöglicht eine schwenkbare Koppelung der Bedienhebel 22, 26, wobei durch die gabelförmige Aufnahme 62 auch ein Längenausgleich beim Verschwenken des ersten und des zweiten Bedienhebels 22, 26 möglich ist (siehe Figur 4). Die gabelförmige Aufnahme 62 kann allerdings auch am zweiten Hebelarm des ersten Bedienhebels und der Zapfen 64 am ersten Hebelarm des zweiten Bedienhebels 26 vorgesehen sein.

Diese Koppelung bietet zudem den Vorteil, dass eine einfache Montage möglich ist, indem der Zapfen 64 in Längsrichtung in die gabelförmige Aufnahme geschoben wird. Die Bedienhebel 22, 26 können beispielsweise miteinander gekoppelt werden, wenn diese von verschiedenen Richtungen in das Gehäuseteil 42 eingeschoben werden.

Die Koppelung der Lamelle 14 mit dem zweiten Bedienhebel 26 erfolgt auf die gleiche Weise, ist hier aber nicht im Detail dargestellt. Analog zur Koppelung der Bedienhebel 22, 26 kann der zweite Bedienhebel einfach beim Einschieben des Gehäuseteils 42 in die Aussparung 48 mit der Lamelle 14 in Eingriff gelangen.

Abweichend von der hier dargestellten Ausführungsform können die Bedienhebel 22, 26 aber auch ohne Gehäuseteil 42 direkt an der zweiten Lamelle 16 gelagert sein. Insbesondere ist es auch denkbar, dass der Luftausströmer 12 lediglich eine Gruppe Lamellen aufweist, wobei die Bedieneinrichtung 10 in diesem Fall luftausströmerseitig befestigt sein kann.

## Patentansprüche

1. Bedieneinrichtung (10) für einen Luftausströmer (12), der zumindest eine verschwenkbare Lamelle (14) aufweist, mit einem ersten Bedienhebel (22), der einen ersten Hebelarm (30), einen zweiten Hebelarm (34) sowie ein zwischen diesen angeordnetes Lagerelement (38) aufweist, um das der erste Bedienhebel (22) um eine Schwenkachse (24) schwenkbar gelagert ist, und mit einem zweiten Bedienhebel (26), der einen ersten Hebelarm (32), einen zweiten Hebelarm (36) sowie ein zwischen diesen angeordnetes Lagerelement (40) aufweist, um das der zweite Bedienhebel (26) um eine Schwenkachse (28) schwenkbar gelagert ist, wobei der erste Hebelarm (32) des zweiten Bedienhebels (26) mit dem zweiten Hebelarm (34) des ersten Bedienhebels (22) gekoppelt ist und der zweite Hebelarm (36) des zweiten Bedienhebels (26) mit der Lamelle (14) schwenkbar gekoppelt werden kann, **dadurch gekennzeichnet, dass** ein Gehäuseteil (42) vorgesehen ist, das eine Lageraufnahme (44, 46) für die Lagerelemente (38, 40) des ersten und des zweiten Bedienhebels (22, 26) aufweist.

2. Bedieneinrichtung nach Anspruch 1, **dadurch gekennzeichnet, dass** die Schwenkachsen (24, 28) des ersten Bedienhebels (22) und des zweiten Bedienhebels (26) parallel zueinander angeordnet sind.

3. Bedieneinrichtung nach einem der vorhergehenden Ansprüche, **dadurch gekennzeichnet, dass** die Lageraufnahmen (44, 46) jeweils einen Einführabschnitt (52, 54) sowie eine Verrastung (56, 58) für die Lagerelemente (38, 40) aufweisen.

4. Bedieneinrichtung nach einem der vorhergehenden Ansprüche, **dadurch gekennzeichnet, dass** am Gehäuseteil (42), insbesondere am Außenumfang des Gehäuseteils, Halteelemente, insbesondere Rastelemente (60), zur luftausströmerseitigen Montage des Gehäuseteils (42) vorgesehen sind.

5. Bedieneinrichtung nach einem der vorhergehenden Ansprüche, **dadurch gekennzeichnet, dass** am ersten Hebelarm (32) des zweiten Bedienhebels (26) oder am zweiten Hebelarm (34) des ersten Bedienhebels (22) eine gabelförmige Aufnahme (62) vorgesehen ist und am zweiten Hebelarm (34) des ersten Bedienhebels (22) oder am ersten Hebelarm (32) des zweiten Bedienhebels (26) ein Zapfen (64), der in die gabelförmige Aufnahme (62) ragt und in dieser drehbar und in Längsrichtung der gabelförmigen Aufnahme (62) verschiebbar gelagert ist.

6. Bedieneinrichtung nach einem der vorhergehenden Ansprüche, **dadurch gekennzeichnet, dass** die Lagerelemente (38, 40) Lagerzapfen sind.

7. Bedieneinrichtung nach einem der vorhergehenden Ansprüche, **dadurch gekennzeichnet, dass** am ersten Hebelarm (30) des ersten Bedienhebels (22) ein Bedienknopf (50) vorgesehen ist.

8. Luftausströmer (12), insbesondere für ein Fahrzeug, mit zumindest einer verschwenkbaren Lamelle (14) und einer Bedieneinrichtung (10) nach einem der vorhergehenden Ansprüche, wobei der zweite Hebelarm (36) des zweiten Bedienhebels (26) der Bedieneinrichtung (10) mit der Lamelle (14) schwenkbar gekoppelt ist.

9. Luftausströmer nach Anspruch 8, **dadurch gekennzeichnet, dass** die Schwenkachsen (24, 28) des ersten und des zweiten Bedienhebels (22, 26) sowie die Schwenkachse (18) der Lamelle (14) parallel zueinander angeordnet sind und insbesondere in einer Ebene liegen.

10. Luftauströmer nach einem der Ansprüche 8 und 9, **dadurch gekennzeichnet, dass** zumindest eine zweite verschwenkbare Lamelle (16) vorgesehen ist, wobei die Schwenkachse (20) der zweiten Lamelle (16) insbesondere quer zur Schwenkachse (18) der ersten Lamelle (14) angeordnet ist und die zweite Lamelle (16) in Strömungsrichtung hinter der ersten Lamelle (14) angeordnet ist.

11. Luftausströmer nach Anspruch 10, **dadurch gekennzeichnet, dass** an der zweiten Lamelle (16) Lageraufnahmen für die Lagerelemente (38, 40) des ersten und des zweiten Bedienhebels (22, 26) vorgesehen sind.

12. Luftausströmer nach einem der Ansprüche 9 bis 12, **dadurch gekennzeichnet, dass** an der zweiten Lamelle (16) ein Gehäuseteil (42) vorgesehen ist, das Lageraufnahmen (44, 46) für die Lagerelemente (38, 40) des ersten und des zweiten Bedienhebels (22, 26) aufweist.

## Claims

1. Operating device (10) for an air vent (12) which has at least one pivotable slat (14), with a first operating lever (22) which has a first lever arm (30), a second lever arm (34) and a bearing element (38) which is arranged between said lever arms and about which the first operating lever (22) is mounted pivotably about a pivot axis (24), and with a second operating lever (26) which has a first lever arm (32), a second lever arm (36) and a bearing element (40) which is arranged between said two lever arms and about which the second operating lever (26) is mounted pivotably about a pivot axis (28), wherein the first lever arm (32) of the second operating lever (26) is coupled to the second lever arm (34) of the first operating lever (22), and the second lever arm (36) of the second operating lever (26) can be coupled pivotably to the slat (14), **characterized in that** a housing part (42) is provided which has a bearing receptacle (44, 46) for the bearing elements (38, 40) of the first and the second operating lever (22, 26).

2. Operating device according to Claim 1, **characterized in that** the pivot axes (24, 28) of the first operating lever (22) and of the second operating lever (26) are arranged parallel to each other.

3. Operating device according to either of the preceding claims, **characterized in that** the bearing receptacles (44, 46) respectively have an insertion portion (52, 54) and a latching means (56, 58) for the bearing elements (38, 40).

4. Operating device according to one of the preceding claims, **characterized in that** holding elements, in particular latching elements (60), for mounting the housing part (42) on the air-vent side are provided on the housing part (42), in particular on the outer circumference of the housing part.

5. Operating device according to one of the preceding claims, **characterized in that** a fork-shaped receptacle (62) is provided on the first lever arm (32) of the second operating lever (26) or on the second lever arm (34) of the first operating lever (22), and a pin (64) is provided on the second lever arm (34) of the first operating lever (22) or on the first lever arm (32) of the second operating lever (26), said pin projecting into the fork-shaped receptacle (62) and being mounted in the latter so as to be rotatable, and so as to be displaceable in the longitudinal direction of the fork-shaped receptacle (62).

6. Operating device according to one of the preceding claims, **characterized in that** the bearing elements (38, 40) are bearing pins.

7. Operating device according to one of the preceding claims, **characterized in that** an operating knob (50) is provided on the first lever arm (30) of the first operating lever (22).

8. Air vent (12), in particular for a vehicle, with at least one pivotable slat (14) and an operating device (10) according to one of the preceding claims, wherein the second lever arm (36) of the second operating lever (26) of the operating device (10) is coupled pivotably to the slat (14).

9. Air vent according to Claim 8, **characterized in that** the pivot axes (24, 28) of the first and the second operating lever (22, 26) and the pivot axis (18) of the slat (14) are arranged parallel to each other and in particular lie in one plane.

10. Air vent according to either of Claims 8 and 9, **characterized in that** at least one second pivotable slat (16) is provided, wherein the pivot axis (20) of the second slat (16) is arranged in particular transversely with respect to the pivot axis (18) of the first slat (14), and the second slat (16) is arranged behind the first slat (14) in the direction of the flow.

11. Air vent according to Claim 10, **characterized in that** bearing receptacles for the bearing elements (38, 40) of the first and the second operating lever (22, 26) are provided on the second slat (16) .

12. Air vent according to one of Claims 9 to 12, **characterized in that** a housing part (42) which has bearing receptacles (44, 46) for the bearing elements (38, 40) of the first and the second operating lever (22, 26) is provided on the second slat (16).

## Revendications

1. Dispositif de commande (10) pour un dispositif d'écoulement d'air (12), qui présente au moins une lamelle pivotante (14), avec un premier levier de commande (22), qui présente un premier bras de levier (30), un second bras de levier (34) ainsi qu'un élément de palier (38) disposé entre ceux-ci, autour duquel le premier levier de commande (22) est monté de façon pivotante autour d'un axe de pivotement (24), et avec un second levier de commande (26), qui présente un premier bras de levier (32), un second bras de levier (36) ainsi qu'un élément de palier (40) disposé entre ceux-ci, autour duquel le second levier de commande (26) est monté de façon pivotante autour d'un axe de pivotement (28), dans lequel le premier bras de levier (32) du second levier de commande (26) est couplé au second bras de levier (34) du premier levier de commande (22) et le second bras de levier (36) du second levier de commande (26) peut être couplé de façon pivotante à la lamelle (14), **caractérisé en ce qu'**il est prévu une partie de boîtier (42), qui présente un logement de palier (44, 46) pour les éléments de palier (38, 40) du premier et du second leviers de commande (22, 26).

2. Dispositif de commande selon la revendication 1, **caractérisé en ce que** les axes de pivotement (24, 28) du premier levier de commande (22) et du second levier de commande (26) sont disposés parallèlement l'un à l'autre.

3. Dispositif de commande selon l'une quelconque des revendications précédentes, **caractérisé en ce que** les logements de palier (44, 46) présentent respectivement une partie d'entrée (52, 54) ainsi qu'un encliquetage (56, 58) pour les éléments de palier (38, 40).

4. Dispositif de commande selon l'une quelconque des revendications précédentes, **caractérisé en ce qu'**il est prévu sur la partie de boîtier (42), en particulier à la périphérie extérieure de la partie de boîtier, des éléments de retenue, en particulier des éléments d'encliquetage (60), pour le montage de la partie de boîtier (42) du côté du dispositif d'écoulement d'air.

5. Dispositif de commande selon l'une quelconque des revendications précédentes, **caractérisé en ce qu'**il est prévu sur le premier bras de levier (32) du second levier de commande (26) ou sur le second bras de levier (34) du premier levier de commande (22) un logement en forme de fourche (62) et sur le second bras de levier (34) du premier levier de commande (22) ou sur le premier bras de levier (32) du second levier de commande (26) un tourillon (64), qui s'engage dans le logement en forme de fourche (62) et qui est monté dans celui-ci de façon rotative et de façon déplaçable dans la direction longitudinale du logement en forme de fourche (62).

6. Dispositif de commande selon l'une quelconque des revendications précédentes, **caractérisé en ce que** les éléments de palier (38, 40) sont des tourillons.

7. Dispositif de commande selon l'une quelconque des revendications précédentes, **caractérisé en ce qu'**il est prévu un bouton de commande (50) sur le premier bras de levier (30) du premier levier de commande (22).

8. Dispositif d'écoulement d'air (12), en particulier pour un véhicule, avec au moins une lamelle pivotante (14) et un dispositif de commande (10) selon l'une quelconque des revendications précédentes, dans lequel le second bras de levier (36) du second levier de commande (26) du dispositif de commande (10) est couplé de façon pivotante à la lamelle (14).

9. Dispositif d'écoulement d'air selon la revendication 8, **caractérisé en ce que** les axes de pivotement (24, 28) du premier et du second leviers de commande (22, 26) ainsi que l'axe de pivotement (18) de la lamelle (14) sont disposés parallèlement l'un à l'autre et sont en particulier situés dans un plan.

10. Dispositif d'écoulement d'air selon une des revendications 8 et 9, **caractérisé en ce qu'**il est prévu au moins une seconde lamelle pivotante (16), dans lequel l'axe de pivotement (20) de la seconde lamelle (16) est disposé en particulier transversalement à l'axe de pivotement (18) de la première lamelle (14) et la seconde lamelle (16) est disposée dans la direction d'écoulement après la première lamelle (14).

11. Dispositif d'écoulement d'air selon la revendication 10, **caractérisé en ce qu'**il est prévu sur la deuxième lamelle (16) des logements de palier pour les éléments de palier (38, 40) du premier et du second leviers de commande (22, 26).

12. Dispositif d'écoulement d'air selon l'une quelconque des revendications 9 à 12, **caractérisé en ce qu'**il est prévu sur la seconde lamelle (16) une partie de boîtier (42), qui présente des logements de palier (44, 46) pour les éléments de palier (38, 40) du premier et du second leviers de commande (22, 26).
